# EUROPÄISCHE PATENTANMELDUNG

(11) **EP 1 516 815 A1**
(43) Veröffentlichungstag der Anmeldung: **23.03.2005**
(21) Anmeldenummer: 04018809.6
(22) Anmeldetag: 09.08.2004
(51) Int. Cl.: B64G 4/00, B25J 18/02, B25J 18/06

(54) **Vorrichtung zum Greifen von Objekten im All**

(30) Priorität: 17.09.2003 DE 10342953
(71) Anmelder: EADS Space Transportation GmbH, 28199 Bremen (DE)
(72) Erfinder: Bischof, Bernd, 27777 Ganderkesee (DE); Starke, Jürgen, 28355 Bremen (DE); Günther, Hansjürgen, 28717 Bremen (DE); Foth, Peter, 28844 Weyhe-Leeste (DE); Kerstein, Lothar, 27367 Sottrum (DE)
(74) Vertreter: Hansmann, Dierk, Dipl.-Ing.

(57) **Zusammenfassung**

Eine Vorrichtung (1) zum ferngesteuerten Greifen von Objekten (12) im All, insbesondere zum Einfangen von Satelliten und anderen Objekten. Diese Vorrichtung, von einer Orbitalplattform (3) aus einsetzbar und mit dieser verbunden, besteht aus einem Teleskop-Greifer-Mechanismus (14), der auf einem frei fliegenden System angeordnet ist, das wenigstens über ein Seil oder ein Kabel (2) mit der Orbitalplattform (3) verbunden ist. Der Teleskop-Greifer-Mechanismus (14) wird von einem Drei-Finger-Mechanismus (15) gebildet, der gelenkig an einem Teleskoparm (16) befestigt ist und dem wenigstens eine Kamera sowie ein Entfernungsmesser zugeordnet sind. Vorzugsweise sind drei derartige Greifvorrichtungen (1) auf einer Orbitalplattform (3) installiert.

## Beschreibung

Die Erfindung betrifft eine Vorrichtung zum ferngesteuerten Greifen von Objekten im All, insbesondere zum Einfangen von Satelliten und anderen Objekten, die von einer Orbitalplattform aus einsetzbar ist.

Vorrichtungen dieser Art sind bereits bekannt und bestehen in der Regel aus vergleichsweise komplexen Robotiksystemen.

Aufgabe der Erfindung ist es, eine derartige Vorrichtung möglichst einfach und effizient, dabei aber zugleich möglichst flexibel einsetzbar auszubilden.

Die Erfindung löst diese Aufgabe dadurch, daß bei einer Vorrichtung der eingangs genannten Art, ein Teleskoparm-Greifer-Mechanismus auf einem frei fliegenden System angeordnet ist, das über ein Seil/Kabel mit der Orbitalplattform verbunden ist.

Die erfindungsgemäße Vorrichtung ist dabei derart ausgebildet, daß sie das zu ergreifende Zielobjekt zwar festhält, sich aber nach Beendigung der Mission vom Zielobjekt wieder lösen kann und dadurch mehrfach einsetzbar, d. h. wiederverwendbar, ist. Durch ihren vergleichsweise "sanft" einsetzenden Greifmechanismus kann die Vorrichtung nach der Erfindung auch Zielobjekte handhaben, die noch aktiv sind oder die wieder aktiviert werden sollen. Zum Beispiel kann mit der erfindungsgemäßen Vorrichtung ein nicht auf seiner nominellen Bahn befindlicher Satellit oder anderes Objekt wieder auf seine richtige Umlaufbahn gebracht werden, indem die Vorrichtung den Satelliten z.B. durch ein am Satelliten vorhandenes Element (z.B. Öse) ergreift und hält, ohne diesen zu beschädigen.

Die Greifvorrichtung nach der Erfindung ist steuerbar und vom Boden aus manipulierbar; ferner kann der Greifvorgang nach einem gescheiterten Greifversuch ohne Probleme wiederholt werden. Je nach der Beschaffenheit des zielobjektes ist es im Rahmen der Erfindung auch möglich, zwei Greifvorrichtungen nach der Erfindung entweder nacheinander oder parallel einzusetzen und auf diese Weise eine sehr stabile Konfiguration zu erreichen und so beispielsweise Taumelbewegungen zu reduzieren und zu vermeiden.

Nachfolgend soll die Erfindung anhand eines in Zeichnungen dargestellten Ausführungsbeispiels näher erläutert werden. Es zeigen:

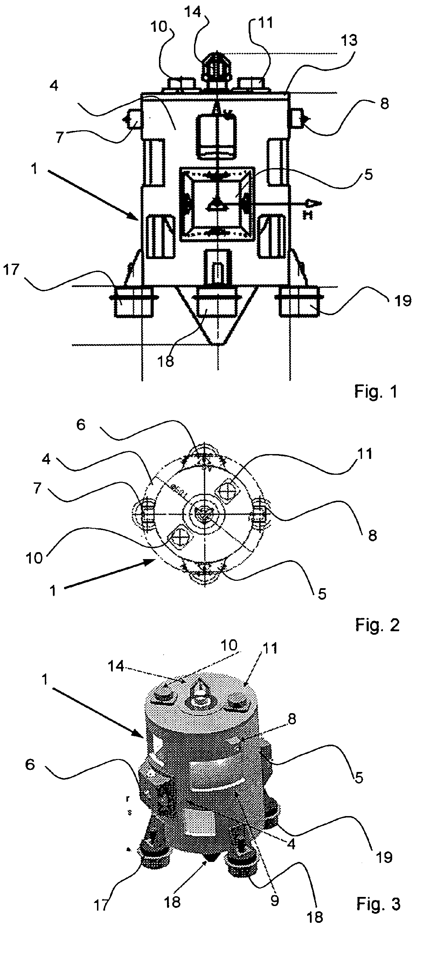

- Fig. 1 und 2: eine Greifvorrichtung in zwei Ansichten

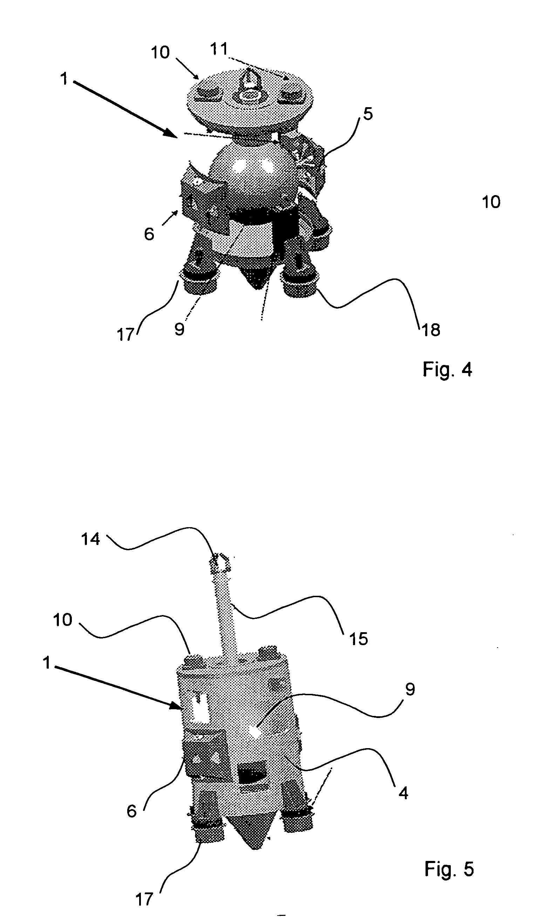

- Fig. 3 bis 5: die Vorrichtung gemäß den Figuren 1 und 2 in drei unterschiedlichen perspektivischen Darstellungen,
- Fig. 6 und 7: eine mit drei Greifvorrichtungen gemäß den Figuren 1 bis 3 ausgestattete Orbitalplattform und
- Fig. 8 bis 10: eine Anordnung gemäß den Figuren 6 und 7 in verschiedenen Stadien ihres Einsatzes

Die in den Figuren dargestellte Vorrichtung 1 besteht aus einem Teleskoparm-Greifer-Mechanismus, der an einem frei fliegenden System angeordnet ist, das seinerseits durch ein Kabel 2 mit einer Orbitalplattform 3 verbunden ist. Das Kabel schließt neben einem Seilzug zugleich auch elektrische Versorgungs- und eine Datenleitungen mit ein.

Die Greifvorrichtung 1 wird gebildet umschlossen von einem Gehäuse 4, in dem ein Kaltgasantriebssystem mit insgesamt zwölf Düsen angeordnet ist, die im Fall des hier beschriebenen Ausführungsbeispiels jeweils einen Schub von 1 N aufweisen. Von den Düsen sind insgesamt zehn zu zwei Clustern 5 bzw. 6 mit jeweils fünf Düsen zusammengefaßt, während zwei einzelne Düsen 7 und 8 jeweils separat am Gehäuse 4 angeordnet sind. weiterhin ist im Inneren des Gehäuses 4 ein Tank 9 angeordnet, der im Fall des hier beschriebenen Ausführungsbeispiels ein Fassungsvermögen von etwa 5 kg Stickstoff aufweist. Ferner ist die Greifvorrichtung 1 mit zwei Stereokameras 10, 11 sowie mit einem in der Zeichnung nicht dargestellten, auf Lasertechnologie basierenden Entfernungsmesser ausgestattet. Diese Ausrüstung ermöglicht es einem Bodenoperator, die Vorrichtung 1 zu einem speziellen Befestigungspunkt an einem zu ergreifenden Zielobjekt 12 zu steuern.

Auf einer oberen Plattform 13 der Greifvorrichtung 1 ist ein Teleskoparm-Greifer-Mechanismus 14 montiert, der aus einem Drei-Finger-Mechanismus 15 besteht, mit dem ein Zielobjekt 12 an einer vorgegebenen Stelle ergriffen und gehalten werden kann. Der Drei-Finger-Mechanismus 15 ist auf einem Teleskoparm 16 befestigt, der im Fall des hier beschriebenen Ausführungsbeispiels etwa 60 cm weit ausfahrbar ist und bei dem zwischen dem Mechanismus 15 und dem Teleskoparm 16 ein Gelenk vorgesehen ist.

Die Greifvorrichtung 1 weist im Fall des hier beschriebenen Ausführungsbeispiels zylindrische Dimensionen von ca. 780 mm Länge und ca. 480 mm Durchmesser auf und ist auf der Unterseite mit vier Start- und Trennungsadaptern 17 bis 20 versehen. Diese Start- und Trennungsadapter, mit Sprungfedern und pyrotechnischen Einheiten für die Raketenstartphase und für die Trennung im Rahmen einer ersten Mission ausgestattet, ermöglichen eine stabile Verbindung zur Orbitalplattform 3.

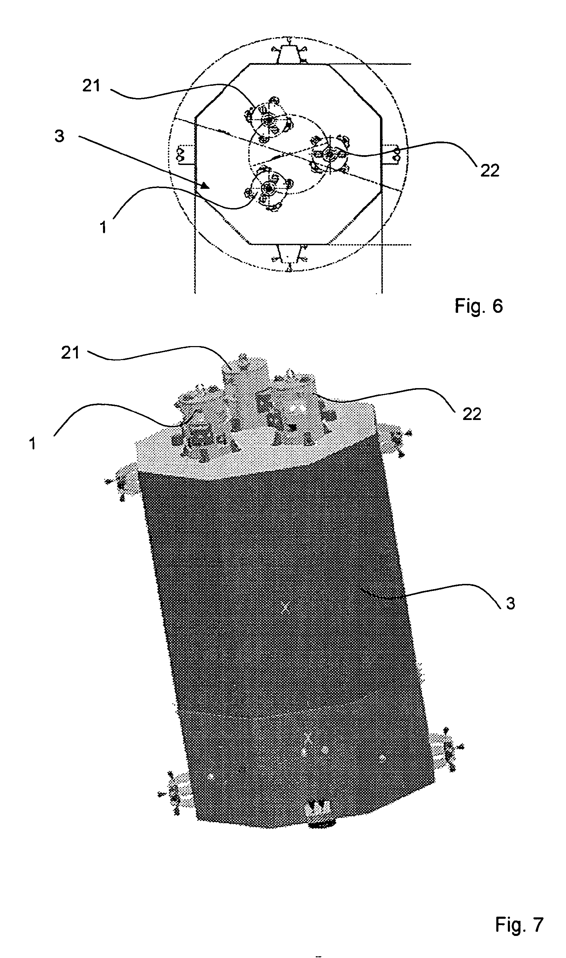

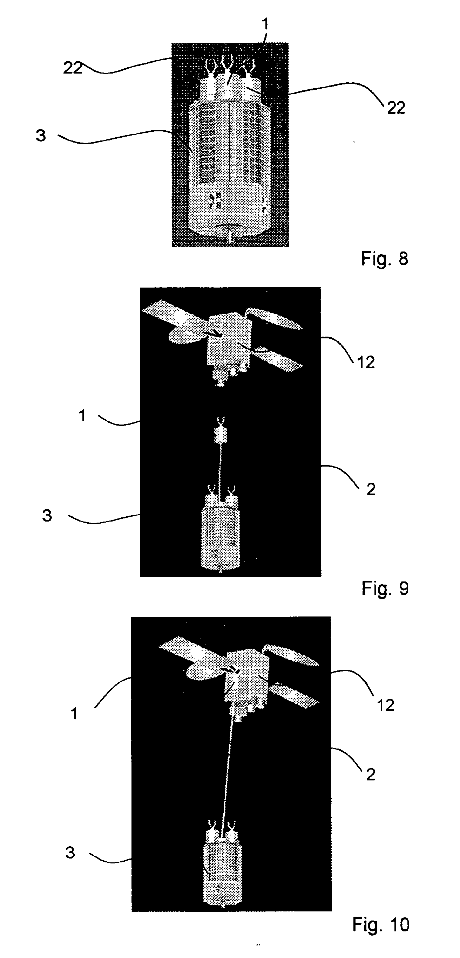

In den Figuren 6 bis 10 ist eine Anordnung dargestellt, bei der drei solcher Greifvorrichtungen 1, 21, 22 auf einer Orbitalplattform 3 installiert sind. Zwei dieser Greifvorrichtungen 1, 21, 22 sind dabei für nominale Servicemissionen vorgesehen, während eine dritte Vorrichtung als Reserve dient. Jede der drei Greifvorrichtungen 1, 21, 22 ist mit einem eigenen Kaltgastank ausgerüstet und kann im Fall des hier beschriebenen Ausführungsbeispiels mit einem Gesamtgeschwindigkeitsinkrement von etwa 75 m/sec bewegt werden. Die 1N Düsen der Greifvorrichtungen 1, 21, 22 können diese dabei derart beschleunigen, daß innerhalb kurzer Zeit eine Geschwindigkeit erreicht wird, die ausreicht, um die Vorrichtung in Einklang mit den Bewegungen des Zielobjektes 12 zu bringen, so daß der Greifmechanismus der Vorrichtung mit einem äußeren Befestigungspunkt am Zielobjekt 12 in Eingriff gebracht werden kann.

Die Kabelverbindung 2 ist auf der Seite der Orbitalplattform 3 auf einer Kabeltrommel aufgerollt. Die Kabeltrommel ist fest in die Orbitalplattform integriert. Während der einzelnen Missionen wird die Kabeltrommel, angepasst an den Schub der Düsen 5-8 der Vorrichtung 1, lose abgerollt. Nach dem Ergreifen des Zielobj ektes 12 wird die Länge des Kabelzuges so geregelt, dass der Abstand zwischen Orbitalplattform 3 und Zielobjekt 12 konstant bleibt. Nach dem Freigeben des Zielobjektes 12 wird die Vorrichtung 1 über die Kabeltrommel so an die Orbitalplattform herangezogen, dass die Start- und Trennadapter 17 bis 20 wieder fest auf dafür vorgesehenen Ablagepositionen auf der Orbitalplattform 3 aufliegen. In dieser stabilen Konfiguration kann die Orbitalplattform zum nächsten Zielobjekt überführt werden.

## Patentansprüche

1. Vorrichtung zum ferngesteuerten Greifen von Objekten im All, insbesondere zum Einfangen von Satelliten und anderen orbitalen Objekten, die von einer Orbitalplattform aus einsetzbar und mit dieser verbunden ist, **dadurch gekennzeichnet, daß** ein Teleskoparm-Greifer-Mechanismus (14) auf einem frei fliegenden System (1) angeordnet ist, das über ein Seil/Kabel (2) mit der Orbitalplattform (3) verbunden ist.

2. Vorrichtung nach Anspruch 1, **dadurch gekennzeichnet, daß** der Greifer-Mechanismus (14) aus einem Drei-Finger-Mechanismus (15) besteht, der gelenkig an einem feststehenden Arm (16) befestigt ist.

3. Vorrichtung nach Anspruch 1 oder 2, **dadurch gekennzeichnet, daß** der Teleskoparm-Greifer-Mechanismus (14) aus einem Drei-Finger-Mechanismus (15) besteht, der gelenkig an einem Teleskoparm (16) befestigt ist.

4. Vorrichtung nach einem der Ansprüche 1 bis 3, **dadurch gekennzeichnet, daß** dem Teleskoparm-Greifer-Mechanismus (14) wenigstens eine Kamera (10, 11) sowie ein Entfernungsmesser zugeordnet sind.

5. Vorrichtung nach einem der Ansprüche 1 bis 4, **dadurch gekennzeichnet, dass** die Vorrichtung über ein in seiner Länge einstellbares Kabel mit der Orbitalplattform verbunden ist.

6. Vorrichtung nach einem der Ansprüche 1 bis 5, **dadurch gekennzeichnet, dass** die Einstellung des Kabels über eine in ihrer Position regelbare Seiltrommel erfolgt.

7. Vorrichtung nach einem der Ansprüche 1 bis 6, **dadurch gekennzeichnet, daß** drei Greifvorrichtungen (1, 21, 22) auf der Orbitalplattform (3) installiert sind.
